# EUROPEAN PATENT APPLICATION

(11) **EP 4 807 917 A1**
(43) Date of publication of application: **16.09.2026**
(21) Application number: 24911872.0
(22) Date of filing: 11.09.2024
(51) Int. Cl.: H01R 39/38, F16C 19/02, H01R 39/00, H02K 5/173

(54) **BRUSH UNIT AND CONNECTION DEVICE**

(30) Priority: 27.12.2023 JP 2023220971
(71) Applicant: NSK Ltd., Tokyo 141-8560 (JP)
(72) Inventor: YAMAGISHI Takato, Fujisawa-shi, Kanagawa 251-8501 (JP); ONO Junji, Fujisawa-shi, Kanagawa 251-8501 (JP); SHIGETA Chiharu, Takasaki-shi, Gunma 370-3344 (JP)
(74) Representative: Grünecker Patent- und Rechtsanwälte PartG mbB
(86) International application number: PCT/JP2024/032543
(87) International publication number: WO 2025/141978

(57) **Abstract**

A brush unit abuts on a shaft conductive part provided on a rotary shaft to electrically connect a housing and the shaft conductive part. The brush unit includes a holder, a brush abutting on the shaft conductive part via a first opening part provided in the holder, a spring, a tubular sleeve holding the brush, an electrode, and a wiring connecting the brush and the electrode. The electrode is sandwiched between a second projecting part of the holder and the sleeve.

## Description

### Technical Field

The present disclosure relates to a brush unit of a connection device that electrically connects a rotary shaft and a conductor, and a connection device.

### Background Art

There is a case where a rotary shaft driven by an electric motor is electrically charged. When electric charge charged on the rotary shaft flows as a current through a bearing that supports the rotary shaft, electrolytic corrosion sometimes occurs in the bearing. In order to prevent a current from flowing through the bearing, for example, Patent Literature 1 discloses that a brush unit is brought to abut on an end portion of a rotary shaft. Patent Literature 1 also discloses that an electric charge charged on the rotary shaft is caused to flow to a conductor such as a housing via the brush unit.

### Citation List

### Patent Literature

[Patent Literature 1] Japanese Patent No. 6242566

### Summary of Invention

### Technical Problem

Patent Literature 1 does not disclose details of the configuration of a brush unit that causes a current to flow from the rotary shaft to the conductor. For this reason, the present technical field demands a brush unit capable of securing a stable conductive path having higher conductivity, and a connection device including the brush unit.

### Solution to Problem

A brush unit according to the present disclosure is [1] "a brush unit attached to a conductor and abutting on a shaft conductive part provided on a rotary shaft to electrically connect the conductor and the shaft conductive part, the brush unit including: a holder attached to the conductor, having conductivity, and having an accommodation space provided on an inner side thereof; a brush accommodated in the accommodation space, abutting on the shaft conductive part via a first opening part provided in the holder, and having conductivity; a biasing part that biases the brush toward a side of the first opening part; a tubular sleeve accommodated in the accommodation space, having the brush arranged on an inner side thereof, and holding the brush so as to be slidable in a biasing direction of the brush by the biasing part; an electrode having conductivity; and a wiring connecting the brush and the electrode, in which the holder includes: a holder body part provided so as to surround the sleeve, having a tubular shape extending in the biasing direction of the brush by the biasing part, and having one end opening part of the tubular shape as the first opening part; and a second projecting part projecting inward from a second opening part on a side opposite to the first opening part in the holder body part, the second projecting part being opposed to an end surface of the sleeve on a side of the second opening part in the biasing direction of the brush by the biasing part, and the electrode being sandwiched between the second projecting part and the sleeve".

In this brush unit, the holder attached to the conductor and the brush abutting on the shaft conductive part attached to the rotary shaft are electrically connected to each other via the wiring and the electrode. In addition, the electrode is sandwiched between the second projecting part of the holder and the sleeve. As a result, the electrode and the holder are stably electrically connected to each other. Thus, the brush unit is capable of securing a stable conductive path having higher conductivity.

The brush unit according to the present disclosure may be [2] "the brush unit according to the above [1], in which the holder further includes a first projecting part projecting inward from the first opening part in the holder body part, the first projecting part being opposed to an end surface of the sleeve on a side of the first opening part in the biasing direction of the brush by the biasing part, and the sleeve and the electrode being sandwiched between the first projecting part and the second projecting part". In this case, the electrode is sandwiched between the first projecting part and the second projecting part together with the sleeve, whereby the electrode is more reliably electrically connected to the holder.

The brush unit according to the present disclosure may be [3] "the brush unit according to the above [2], in which the first projecting part is provided with a first oil passage hole, the second projecting part is provided with a second oil passage hole, and a portion between an inner peripheral surface and an outer peripheral surface of the sleeve is provided with a sleeve oil passage hole extending in the biasing direction of the brush by the biasing part". In this case, in the brush unit, an oil passage connecting the conductor side and the rotary shaft side is formed by the first oil passage hole, the sleeve oil passage hole, and the second oil passage hole. Thus, the brush unit can also be used as an oil passage through which oil such as lubricating oil flows between the conductor and the rotary shaft.

The brush unit according to the present disclosure may be [4] "the brush unit according to the above [1], in which the holder body part is provided with a holder oil passage hole connecting an outer peripheral surface and an inner peripheral surface of the holder body part, and an outer peripheral surface of the sleeve is provided with an outer oil passage groove extending in the biasing direction of the brush by the biasing part". In this case, in the brush unit, an oil passage connecting the conductor side and the rotary shaft side is formed by the holder oil passage hole and the outer oil passage groove. Note that at an end portion of the holder on the side of the first opening part, oil passes through a gap between an outer peripheral surface of the brush and the holder. Thus, the brush unit can also be used as an oil passage through which oil such as lubricating oil flows between the conductor and the rotary shaft.

The brush unit according to the present disclosure may be [5] "the brush unit according to the above [1], in which the holder body part is provided with a holder oil passage hole connecting an outer peripheral surface and an inner peripheral surface of the holder body part, an inner peripheral surface of the sleeve is provided with an inner oil passage groove extending in the biasing direction of the brush by the biasing part, and the sleeve is further provided with an introduction oil passage hole connecting an outer peripheral surface of the sleeve and the inner oil passage groove". In this case, in the brush unit, an oil passage connecting the conductor side and the rotary shaft side is formed by the holder oil passage hole, the introduction oil passage hole, and the inner oil passage groove. Note that at an end portion of the holder on the side of the first opening part, oil passes through a gap between an outer peripheral surface of the brush and the holder. Thus, the brush unit can also be used as an oil passage through which oil such as lubricating oil flows between the conductor and the rotary shaft.

The brush unit according to the present disclosure may be [6] "the brush unit according to any one of the above [1] to [5], in which the electrode is elastically deformable in a sandwiching direction of the second projecting part and the sleeve, and is sandwiched in a state of being compressed by the second projecting part and the sleeve". In this case, the electrode biases the second projecting part of the holder by a force of the electrode trying to return to its original shape. As a result, in the brush unit, contact between the electrode and the holder is improved, and the electrode and the second projecting part of the holder can be electrically connected to each other even more stably.

The brush unit according to the present disclosure may be [7] "the brush unit according to any one of the above [1] to [6], in which an outer edge portion of the electrode is sandwiched between the holder body part and the second projecting part at a corner portion where the holder body part and the second projecting part are connected to each other". As a result, in the brush unit, the electrode can be more firmly fixed by sandwiching the outer edge portion of the electrode. Therefore, in the brush unit, the electrode and the holder can be electrically connected to each other even more stably.

A connection device according to the present disclosure is [8] "a connection device electrically connecting a rotary shaft and a conductor, the connection device including: a shaft conductive part attached to an end portion of the rotary shaft and having conductivity; and the brush unit according to any one of the above [1] to [7], the brush unit having one end portion abutting on the shaft conductive part and the other end portion attached to the conductor to electrically connect the shaft conductive part and the conductor".

The connection device includes the above-described brush unit. Therefore, the connection device is capable of securing a stable conductive path having higher conductivity as described above.

### Advantageous Effects of Invention

According to the present disclosure, it is possible to secure a stable conductive path having higher conductivity.

### Brief Description of Drawings

FIG. 1 is a cross-sectional view around a rotary shaft to which a connection device is attached.
FIG. 2(a) is an enlarged cross-sectional view of the brush unit in FIG. 1. FIG. 2(b) is an enlarged cross-sectional view illustrating a state before processing of a holder of the brush unit.
FIG. 3 is an exploded perspective view of the brush unit in FIG. 1.
FIG. 4 is a cross-sectional view of a brush unit according to a first modification.
FIG. 5 is an exploded perspective view of the brush unit according to the first modification.
FIG. 6 is a cross-sectional view of a brush unit according to a second modification.
FIG. 7 is an exploded perspective view of the brush unit according to the second modification.
FIG. 8 is a cross-sectional view of a brush unit according to a third modification.
FIG. 9 is an exploded perspective view of the brush unit according to the third modification.
FIG. 10 is a cross-sectional view of a brush unit according to a fourth modification.
FIG. 11 is a cross-sectional view of a brush unit according to a fifth modification.

### Description of Embodiments

In the following, embodiments of the present disclosure will be described with reference to the drawings. Note that the same or corresponding elements in the drawings are denoted by the same reference signs to omit redundant description thereof.

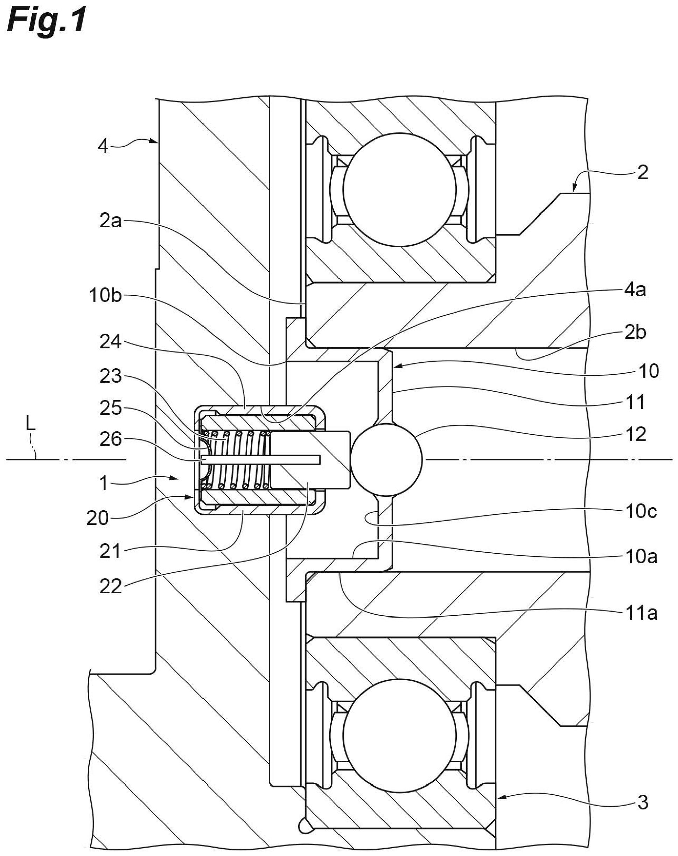

As illustrated in FIG. 1, a connection device 1 electrically connects a rotary shaft 2 rotatably supported by a bearing 3 with a housing (conductor) 4. The rotary shaft 2 may be a shaft of an electric motor or a shaft coupled to the shaft of the electric motor via a gear. In the present embodiment, a part on an end portion 2a side of the rotary shaft 2 is a hollow shaft (hollow structure). Note that the entire rotary shaft 2 may be a hollow shaft as well as the end portion 2a of the rotary shaft 2. The bearing 3 supports the rotary shaft 2 so as to be rotatable about a rotation axis L. A type of the bearing 3 is not particularly limited as long as the rotary shaft 2 can be rotatably supported.

The housing 4 accommodates the connection device 1, the rotary shaft 2, the bearing 3, and the like. The housing 4 has conductivity. In the present embodiment, the connection device 1 electrically connects the rotary shaft 2 and the housing 4. As a result, the connection device 1 forms a conductive path having a lower resistance value than that of a conductive path from the rotary shaft 2 to the housing 4 via the bearing 3.

As illustrated in FIG. 1, the connection device 1 includes a shaft conductive part 10 and a brush unit 20. The shaft conductive part 10 has conductivity. In addition, the shaft conductive part 10 has a shape having a recess 10a. The shaft conductive part 10 is attached to the end portion 2a of the rotary shaft 2 such that an opening part 10b of the recess 10a faces outward.

In more detail, the shaft conductive part 10 includes a ball holder 11 and a steel ball 12. The ball holder 11 and the steel ball 12 each have conductivity. The ball holder 11 has a shape having the recess 10a. As an example, the ball holder 11 is formed by pressing a steel plate.

The steel ball 12 may be, for example, a ball for use in a bearing. The steel ball 12 is attached to a bottom 10c of the recess 10a of the ball holder 11. Here, as an example, the steel ball 12 is fitted into a hole provided in the bottom 10c of the recess 10a of the ball holder 11 and is fixed by caulking. Thus, the steel ball 12 is provided at the bottom 10c of the recess 10a in the shaft conductive part 10, and constitutes a convex-shaped abutting part that abuts on the brush unit 20 (an end surface S of a brush 22). The steel ball 12 is attached to the ball holder 11 such that a center of the steel ball 12 is located on the rotation axis L, which is a rotation center of the rotary shaft 2.

An outer peripheral surface of the ball holder 11 is provided with a fitting part 11a fitted in and fixed to an inner peripheral surface 2b of the end portion 2a of the rotary shaft 2. The ball holder 11 is fitted in and fixed to the inner peripheral surface 2b of the end portion 2a of the rotary shaft 2 such that the opening part 10b of the recess 10a faces outward. The fitting part 11a of the ball holder 11 and the inner peripheral surface 2b of the rotary shaft 2 are engaged with each other. Therefore, the ball holder 11 rotates integrally with the rotary shaft 2. The steel ball 12 abuts on one end portion (the end surface S of the brush 22) of the brush unit 20 in the recess 10a of the ball holder 11.

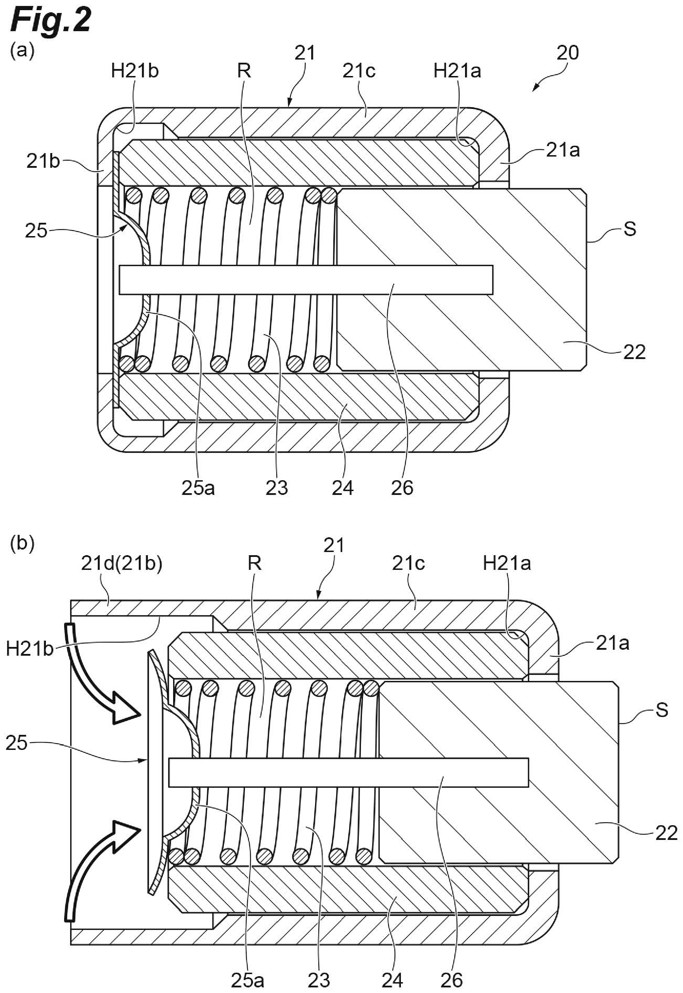

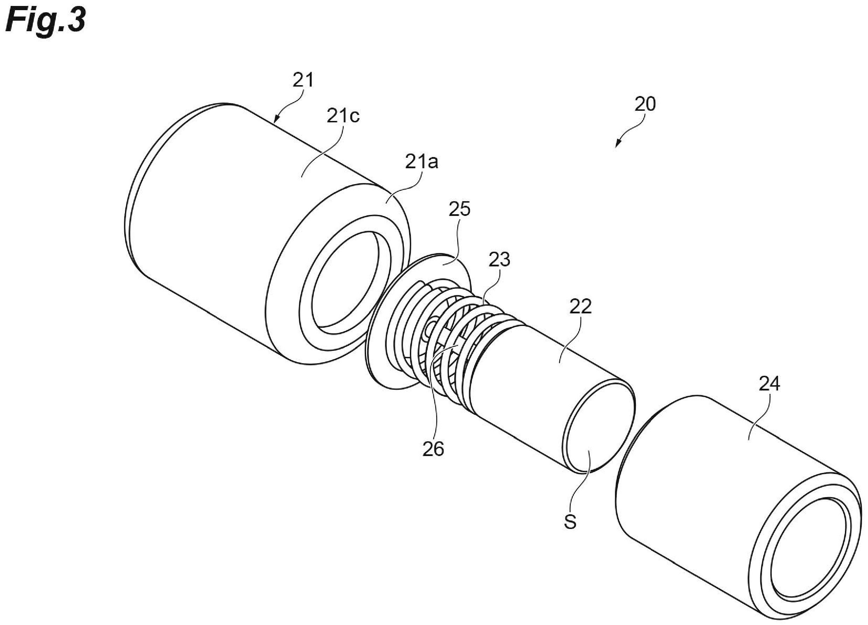

The one end portion of the brush unit 20 is inserted into the recess 10a of the shaft conductive part 10 to abut on the steel ball 12 provided at the bottom 10c of the recess 10a. The other end portion of the brush unit 20 is attached to the housing 4. The brush unit 20 electrically connects the shaft conductive part 10 attached to the rotary shaft 2 and the housing 4. In more detail, as illustrated in FIGS. 2(a) and 3, the brush unit 20 includes a holder 21, a brush 22, a spring (biasing part) 23, a sleeve 24, an electrode 25, and a wiring 26.

The holder 21 has conductivity. As a material of the holder 21, for example, metal (steel) having conductivity can be used. An accommodation space R is provided on an inner side of the holder 21. The holder 21 is provided with a first opening part H21a. An end portion of the holder 21 on the side where the first opening part H21a is provided is inserted into the recess 10a of the shaft conductive part 10. The other end portion of the holder 21 is attached to the housing 4. In the present embodiment, the housing 4 has a recess 4a (see FIG. 1) on the rotation axis L serving as the rotation center of the rotary shaft 2. The holder 21 is attached to the housing 4 with the other end portion being fitted into the recess 4a. As a result, the housing 4 and the holder 21 are electrically connected to each other.

The brush 22 is accommodated in the accommodation space R of the holder 21. The brush 22 has conductivity. The brush 22 is slidable along the rotation axis L in the holder 21. As the brush 22, for example, a carbon brush can be used. In the present embodiment, the brush 22 has a cylindrical shape with the rotation axis L as an axis. However, the brush 22 is not limited to a cylindrical shape, and may have a prismatic shape such as a quadrangular prism. By making the shape of the brush 22 columnar, the brush 22 can be easily formed.

The brush 22 abuts on the shaft conductive part 10 via the first opening part H21a provided in the holder 21. In more detail, in the brush 22, an end surface S on the side of the bottom 10c (the steel ball 12 side) of the recess 10a of the shaft conductive part 10 abuts on the steel ball 12. In other words, the end surface S is an abutting surface that abuts on the steel ball 12. A shape of the end surface S may be flat, a concave shape (as an example, a shape recessed in an arc shape), or a convex shape (as an example, a shape protruding in an arc shape). In the present embodiment, the end surface S need only be in point contact with the steel ball 12.

Note that the steel ball 12 is provided such that the center of the steel ball 12 is located on the rotation axis L as described above. Therefore, the end surface S of the brush 22 and the steel ball 12 are in point contact with each other on the rotation axis L. As a result, even when the shaft conductive part 10 rotates together with the rotary shaft 2, a position of a contact point between the end surface S of the brush 22 and the steel ball 12 is not deviated. In other words, a difference in peripheral speed between the end surface S and the steel ball 12 is zero at a connection part between them.

The spring 23 is accommodated in the accommodation space R. The spring 23 has conductivity. The spring 23 is, as an example, a coil-shaped compression spring. The spring 23 biases the brush 22 toward the side of the first opening part H21a of the holder 21. In other words, the spring 23 biases the brush 22 in a direction in which the brush 22 approaches the steel ball 12. As a result, the brush 22 is brought into point contact with the steel ball 12 in a state where the connection device 1 is attached. In other words, the brush 22 and the steel ball 12 are electrically connected.

The sleeve 24 is accommodated in the accommodation space R. A material of the sleeve 24 may be a resin or a metal having conductivity. The sleeve 24 has a tubular shape. In the present embodiment, the sleeve 24 has a cylindrical shape. The brush 22 and the spring 23 are arranged on an inner side of the sleeve 24. The sleeve 24 extends in the biasing direction of the brush 22 by the spring 23. The sleeve 24 holds the brush 22 so as to be slidable in the biasing direction of the brush 22 by the spring 23.

Here, the holder 21 has a first projecting part 21a, a second projecting part 21b, and a holder body part 21c. The holder body part 21c is provided so as to surround the sleeve 24. The holder body part 21c has a tubular shape extending in the biasing direction of the brush 22 by the spring 23. In the present embodiment, the holder body part 21c has a cylindrical shape. In other words, the sleeve 24 is arranged on an inner side of the holder body part 21c. One end opening part of the tubular shape in the holder body part 21c serves as the first opening part H21a. In the holder body part 21c, an end opening part on a side opposite to the first opening part H21a serves as the second opening part H21b.

The first projecting part 21a projects inward from the first opening part H21a of the holder body part 21c. A predetermined gap is provided between a distal end portion of the first projecting part 21a in the projecting direction and an outer peripheral surface of the brush 22. The first projecting part 21a is opposed to an end surface of the sleeve 24 on the side of the first opening part H21a in the biasing direction of the brush 22 by the spring 23.

The second projecting part 21b projects inward from the second opening part H21b of the holder body part 21c. The second projecting part 21b is opposed to an end surface of the sleeve 24 on the side of the second opening part H21b in the biasing direction of the brush 22 by the spring 23.

The electrode 25 has conductivity. The electrode 25 is accommodated in the accommodation space R and abuts on the second projecting part 21b. The electrode 25 has a protrusion 25a that protrudes toward the brush 22 side. The spring 23 is arranged between the electrode 25 and the brush 22. An end portion of the spring 23 is fitted to the outside of the protrusion 25a. The protrusion 25a can position the spring 23.

The electrode 25 has an outer shape larger than a hole on the inner side of the sleeve 24. An outer edge portion of the electrode 25 is sandwiched between the second projecting part 21b of the holder 21 and the sleeve 24 in the biasing direction of the brush 22 by the spring 23. In the present embodiment, the sleeve 24 and the electrode 25 are sandwiched between the first projecting part 21a and the second projecting part 21b of the holder 21 in the biasing direction of the brush 22 by the spring 23.

One end portion of the wiring 26 is connected to the electrode 25. The other end portion of the wiring 26 is connected to the brush 22. The wiring 26 electrically connects the electrode 25 and the brush 22. The wiring 26 has flexibility, for example. Even when an interval between the electrode 25 and the brush 22 changes, the wiring 26 maintains a state in which the electrode 25 and the brush 22 are electrically connected.

The wiring 26 passes through the inside of the coil-shaped spring 23. In the state where the opposite end portions of the wiring 26 are connected to the electrode 25 and the brush 22, respectively, the brush 22, the spring 23, the electrode 25, and the wiring 26 are integrated with each other. As a result, the brush unit 20 can have improved assemblability when the brush 22, the spring 23, the electrode 25, and the wiring 26 are assembled to the holder 21.

The brush 22 is connected to the electrode 25 by the wiring 26. The electrode 25 is fixed to the holder 21 by being sandwiched between the second projecting part 21b and the sleeve 24. As a result, in a state where the steel ball 12 is not abutting on the brush 22 (e.g., a state at the time of assembling the brush unit 20 to the housing 4, a state before assembling the brush unit 20, and the like), the brush 22 does not fall off from the holder 21.

Note that, as illustrated in FIG. 2(b), the second projecting part 21b may be formed by applying bending processing (e.g., hot curling) to an end portion 21d (a portion that becomes the second projecting part 21b) of the holder body part 21c in a state where each component is accommodated in the accommodation space R of the holder 21.

In addition, the electrode 25 is configured to be elastically deformable in the sandwiching direction of the second projecting part 21b and the sleeve 24. The electrode 25 is sandwiched in a state of being compressed by the second projecting part 21b and the sleeve 24. For example, the state illustrated in FIG. 2(b) is a state where the electrode 25 is not sandwiched by the second projecting part 21b and the sleeve 24. As illustrated in FIG. 2(b), as an example of a configuration that is elastically deformable in the sandwiching direction, a portion of the electrode 25 sandwiched between the second projecting part 21b and the sleeve 24 may be inclined or curved with respect to the end surface of the sleeve 24. When the second projecting part 21b is formed by bending processing, the second projecting part 21b compresses the electrode 25 by pressing the inclined or curved portion of the electrode 25 against the end surface of the sleeve 24, and sandwiches the electrode 25 together with the sleeve 24.

In the present embodiment, the second projecting part 21b extends over an entire circumferential area of the end portion of the holder body part 21c. In other words, the second projecting part 21b has an annular shape. Without being limited thereto, one or a plurality of second projecting parts 21b may be provided intermittently along the circumferential direction of the second opening part H21b of the holder body part 21c. Similarly, the first projecting part 21a is also not limited to having an annular shape. One or a plurality of first projecting parts 21a may be provided intermittently along the circumferential direction of the first opening part H21a of the holder body part 21c.

Next, a conductive path between the rotary shaft 2 and the housing 4 in a case where the connection device 1 is used will be described. In the present embodiment, the ball holder 11, the steel ball 12, the holder 21, the brush 22, the electrode 25, and the wiring 26 have conductivity. Therefore, the rotary shaft 2 is electrically connected to the housing 4 via the ball holder 11, the steel ball 12, the brush 22, the wiring 26, the electrode 25, and the holder 21. In other words, the ball holder 11, the steel ball 12, the brush 22, the wiring 26, the electrode 25, and the holder 21 form a conductive path electrically connecting the rotary shaft 2 and the housing 4. In addition, in the present embodiment, the spring 23 has conductivity. Therefore, between the brush 22 and the electrode 25, the spring 23 can also serve as a conductive path. As a result, the rotary shaft 2 and the housing 4 are electrically connected to each other even when the rotary shaft 2 is in a rotating state.

As described in the foregoing, in this brush unit 20, the holder 21 attached to the housing 4 and the brush 22 abutting on the shaft conductive part 10 attached to the rotary shaft 2 are electrically connected to each other via the wiring 26 and the electrode 25. In addition, the electrode 25 is sandwiched between the second projecting part 21b of the holder 21 and the sleeve 24. As a result, the electrode 25 and the wiring 26 are stably electrically connected to each other. Thus, the brush unit 20 and the connection device 1 including the brush unit 20 are capable of securing a stable conductive path having higher conductivity.

The holder 21 has the first projecting part 21a projecting inward from the first opening part H21a in the holder body part 21c, and the second projecting part 21b projecting inward from the second opening part H21b in the holder body part 21c. The sleeve 24 and the electrode 25 are sandwiched between the first projecting part 21a and the second projecting part 21b. In this case, the electrode 25 is sandwiched between the first projecting part 21a and the second projecting part 21b together with the sleeve 24, whereby the electrode 25 is more reliably electrically connected to the sleeve 24.

The electrode 25 is sandwiched in a state of being compressed by the second projecting part 21b and the sleeve 24. In this case, the electrode 25 biases the second projecting part 21b of the holder 21 by a force of the electrode 25 trying to return to its original shape. As a result, in the brush unit 20, contact between the electrode 25 and the second projecting part 21b of the holder 21 is improved, and the electrode 25 and the second projecting part 21b can be electrically connected to each other even more stably.

### (First Modification)

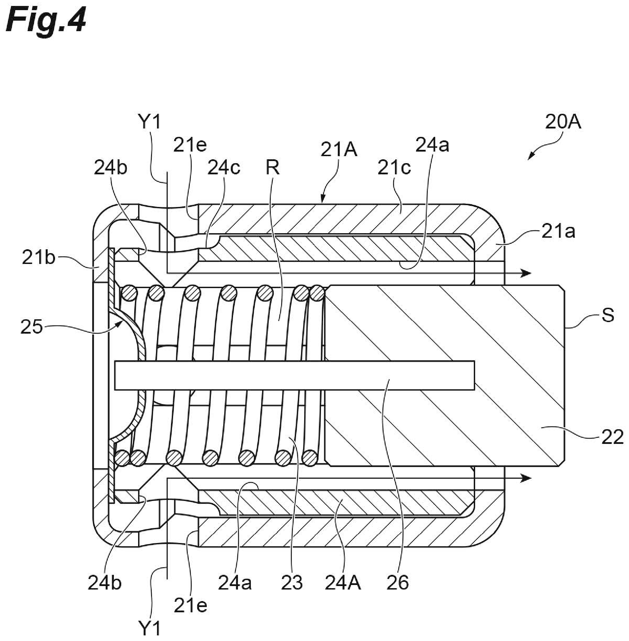

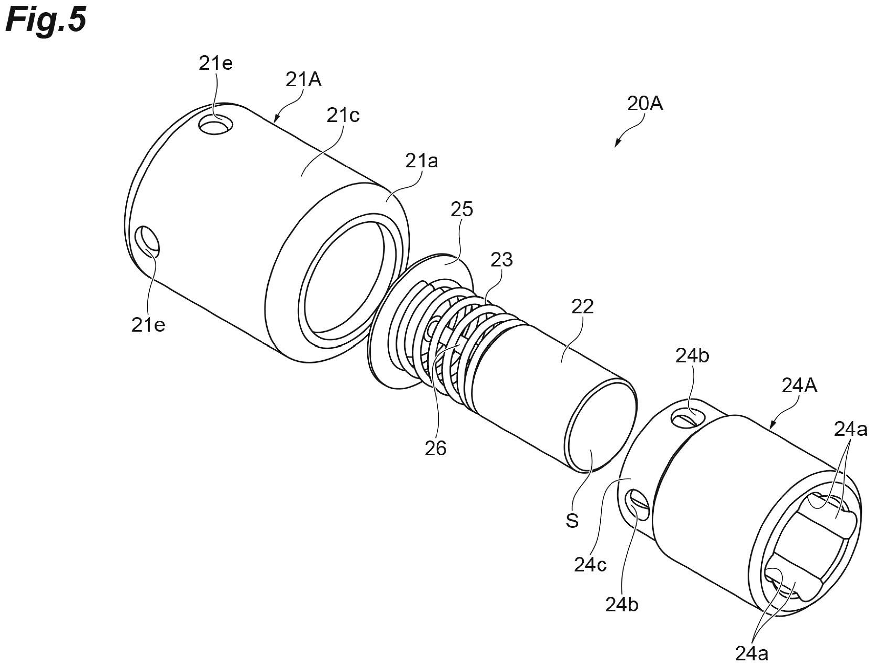

Next, a first modification of the brush unit will be described. As illustrated in FIGS. 4 and 5, a brush unit 20A according to the first modification includes a holder 21A and a sleeve 24A having different configurations instead of the holder 21 and the sleeve 24 according to the above-described embodiment. A holder body part 21c of the holder 21A is provided with a holder oil passage hole 21e connecting an outer peripheral surface and an inner peripheral surface of the holder body part 21c. Note that the housing 4 is provided with an oil passage. The oil passage provided in the housing 4 opens on a wall surface of the recess 4a into which the brush unit 20A is fitted. The holder oil passage hole 21e provided in the holder 21A communicates with the oil passage provided in the housing 4.

An inner peripheral surface of the sleeve 24A is provided with an inner oil passage groove 24a. The inner oil passage groove 24a extends in the biasing direction of the brush 22 by the spring 23. In the present embodiment, a plurality of the inner oil passage grooves 24a are provided on the inner peripheral surface of the sleeve 24A. In addition, the sleeve 24A is provided with an introduction oil passage hole 24b connecting the outer peripheral surface of the sleeve 24A and the inner oil passage groove 24a. The introduction oil passage hole 24b is provided at a position opposed to the holder oil passage hole 21e in a direction orthogonal to the biasing direction of the brush 22 by the spring 23. In addition, an oil passage groove 24c extending in the circumferential direction is provided on the outer peripheral surface of the sleeve 24A at a position where the introduction oil passage hole 24b opens. As a result, the introduction oil passage hole 24b can communicate with the holder oil passage hole 21e provided in the holder 21 via the oil passage groove 24c even when the introduction oil passage hole 24b is not opposed to the holder oil passage hole 21e.

Note that the first projecting part 21a has a projecting length from the holder body part 21c set such that oil flowing through the inner oil passage groove 24a can pass between the distal end portion of the first projecting part 21a and the outer peripheral surface of the brush 22.

In this case, in the brush unit 20A, an oil passage indicated by an arrow Y1 connecting the housing 4 side and the rotary shaft 2 side is formed by the holder oil passage hole 21e, the introduction oil passage hole 24b, and the inner oil passage groove 24a. Note that at an end portion of the holder 21A on the side of the first opening part H21a, oil passes through a gap between the outer peripheral surface of the brush 22 and the holder 21A (the distal end portion of the first projecting part 21a). In addition, a flow direction of the oil may be opposite to the direction indicated by the arrow Y1. The shaft conductive part 10 need only be provided with an oil passage hole around the steel ball 12 so that oil can flow from the brush unit 20A side into the interior of the rotary shaft 2. Thus, the brush unit 20A can also be used as an oil passage through which oil such as lubricating oil flows between the housing 4 and the rotary shaft 2.

### (Second Modification)

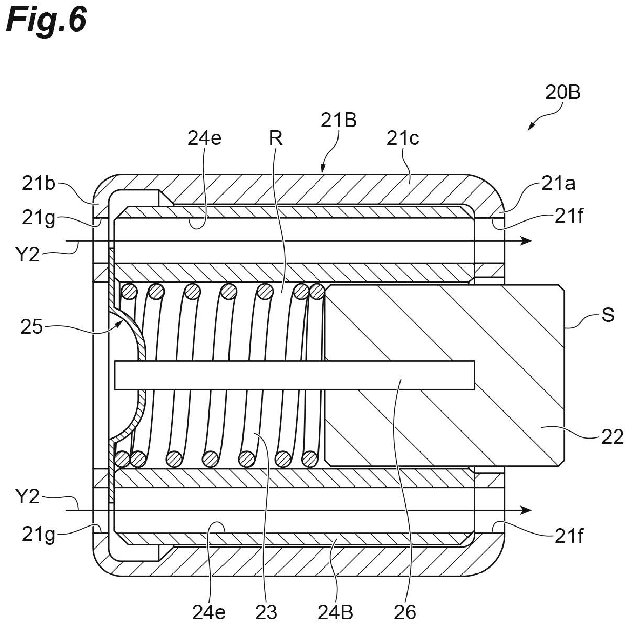

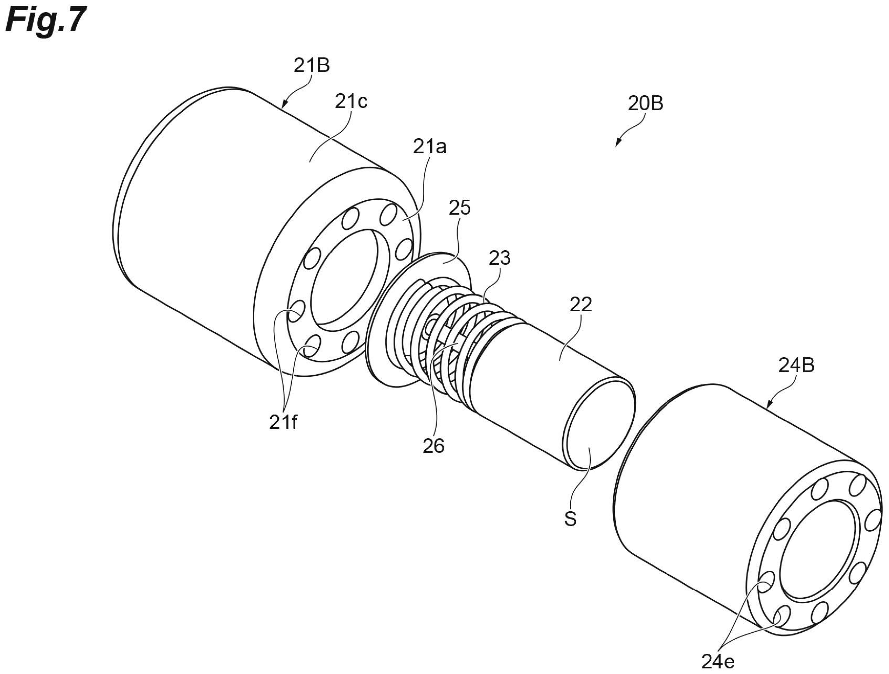

Next, a second modification of the brush unit will be described. As illustrated in FIGS. 6 and 7, a brush unit 20B according to the second modification includes a holder 21B and a sleeve 24B having different configurations instead of the holder 21 and the sleeve 24 according to the above-described embodiment. A first projecting part 21a of the holder 21B is provided with a first oil passage hole 21f. In the present embodiment, a plurality of the first oil passage holes 21f are provided in the first projecting part 21a. A second projecting part 21b of the holder 21B is provided with a second oil passage hole 21g. In the present embodiment, a plurality of the second oil passage holes 21g are provided in the second projecting part 21b. Note that the housing 4 is provided with an oil passage. The oil passage provided in the housing 4 opens on a wall surface of the recess 4a into which the brush unit 20B is fitted. The second oil passage hole 21g provided in the holder 21B communicates with the oil passage provided in the housing 4.

In the sleeve 24B, a portion between an inner peripheral surface and an outer peripheral surface of the sleeve 24B is provided with a sleeve oil passage hole 24e extending in the biasing direction of the brush 22 by the spring 23. In the present embodiment, a plurality of the sleeve oil passage holes 24e are provided around a central hole (a hole accommodating the brush 22 and the like) of the tubular sleeve 24. The sleeve oil passage hole 24e penetrates through the sleeve 24B in the biasing direction of the brush 22 by the spring 23. Note that the electrode 25 has a size that does not block the sleeve oil passage hole 24e provided in the sleeve 24B.

The second oil passage hole 21g provided in the second projecting part 21b of the holder 21B and the sleeve oil passage hole 24e provided in the sleeve 24B communicate with each other. The first oil passage hole 21f provided in the first projecting part 21a of the holder 21B and the sleeve oil passage hole 24e provided in the sleeve 24B communicate with each other. The sleeve 24B is accommodated in the accommodation space R such that the second oil passage hole 21g and the sleeve oil passage hole 24e communicate with each other and the first oil passage hole 21f and the sleeve oil passage hole 24e communicate with each other. However, in the sleeve 24B, a groove extending in the circumferential direction may be provided on an end surface opposed to the second projecting part 21b. The second oil passage hole 21g and the sleeve oil passage hole 24e may communicate with each other via the groove. Similarly, in the sleeve 24B, a groove extending in the circumferential direction may be provided on an end surface opposed to the first projecting part 21a. The first oil passage hole 21f and the sleeve oil passage hole 24e may communicate with each other via the groove.

In this case, in the brush unit 20B, an oil passage indicated by an arrow Y2 connecting the housing 4 side and the rotary shaft 2 side is formed by the second oil passage hole 21g, the sleeve oil passage hole 24e, and the first oil passage hole 21f. In addition, a flow direction of the oil may be opposite to the direction indicated by the arrow Y2. The shaft conductive part 10 need only be provided with an oil passage hole around the steel ball 12 so that oil can flow from the brush unit 20B side into the interior of the rotary shaft 2. Thus, the brush unit 20B can also be used as an oil passage through which oil such as lubricating oil flows between the housing 4 and the rotary shaft 2.

### (Third Modification)

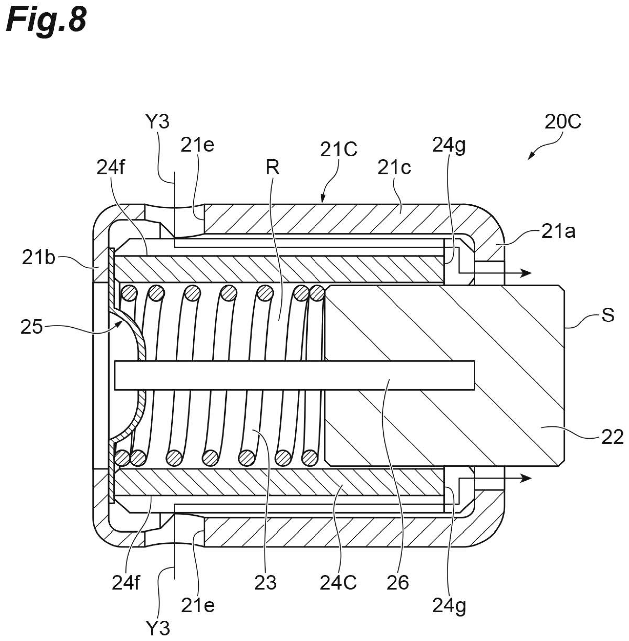

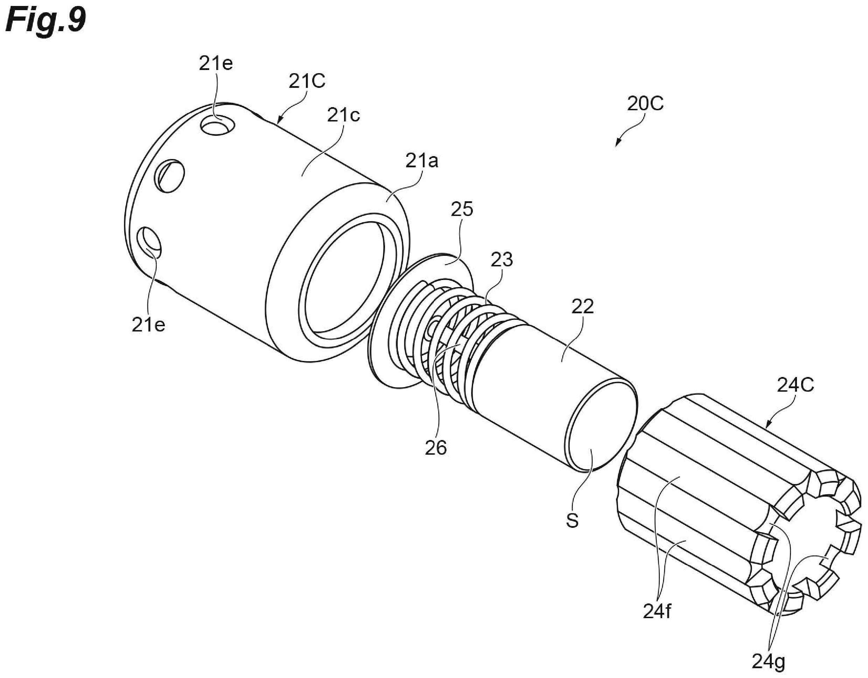

Next, a third modification of the brush unit will be described. As illustrated in FIGS. 8 and 9, a brush unit 20C according to the third modification includes a holder 21C and a sleeve 24C having different configurations instead of the holder 21 and the sleeve 24 according to the above-described embodiment. A holder body part 21c of the holder 21C is provided with a holder oil passage hole 21e connecting an outer peripheral surface and an inner peripheral surface of the holder body part 21c. The brush unit 20C according to the present modification has the same configuration as the brush unit 20A according to the first modification. Note that the housing 4 is provided with an oil passage. The oil passage provided in the housing 4 opens on a wall surface of the recess 4a into which the brush unit 20C is fitted. The holder oil passage hole 21e provided in the holder 21C communicates with the oil passage provided in the housing 4.

An outer peripheral surface of the sleeve 24C is provided with an outer oil passage groove 24f. The outer oil passage groove 24f extends in the biasing direction of the brush 22 by the spring 23. In the present embodiment, a plurality of the outer oil passage grooves 24f are provided on the outer peripheral surface of the sleeve 24C. The holder oil passage hole 21e is opposed to the outer oil passage groove 24f provided in the sleeve 24C. However, a groove extending in the circumferential direction may be provided on the outer peripheral surface of the sleeve 24C at a position opposed to the holder oil passage hole 21e of the holder 21C. The holder oil passage hole 21e and the outer oil passage groove 24f may communicate with each other via the groove.

In this case, in the brush unit 20C, an oil passage indicated by an arrow Y3 connecting the housing 4 side and the rotary shaft 2 side is formed by the holder oil passage hole 21e and the outer oil passage groove 24f. Note that a connecting oil passage 24g connecting the outer peripheral surface of the sleeve 24C and the inner peripheral surface of the sleeve 24C may be provided on an end surface of the holder 21C on the side of the first opening part H21a. The outer oil passage groove 24f may be connected to a gap between the distal end portion of the first projecting part 21a and the outer peripheral surface of the brush 22 via the connecting oil passage 24g. In addition, a flow direction of the oil may be opposite to the direction indicated by the arrow Y3. The shaft conductive part 10 need only be provided with an oil passage hole around the steel ball 12 so that oil can flow from the brush unit 20C side into the interior of the rotary shaft 2. Thus, the brush unit 20C can also be used as an oil passage through which oil such as lubricating oil flows between the housing 4 and the rotary shaft 2.

### (Fourth Modification)

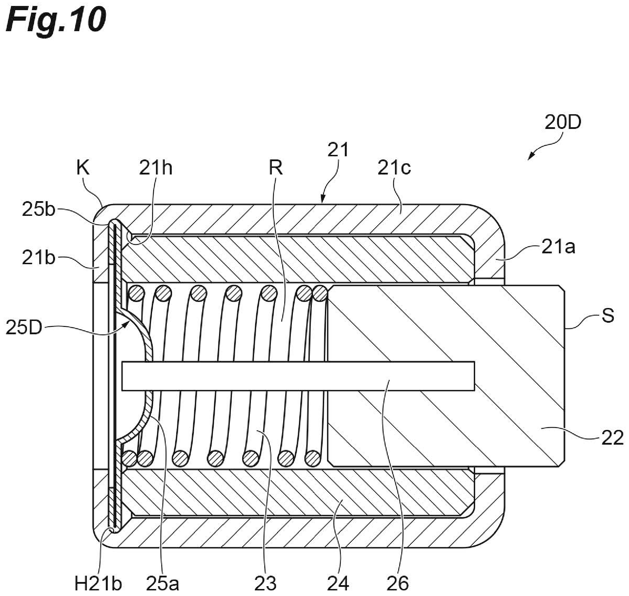

Next, a fourth modification of the brush unit will be described. As illustrated in FIG. 10, a brush unit 20D according to the fourth modification includes an electrode 25D having a different configuration instead of the electrode 25 according to the above-described embodiment. The electrode 25D has an outer diameter larger than an outer diameter of the sleeve 24. An outer edge portion 25b of the electrode 25D is sandwiched between the holder body part 21c and the second projecting part 21b at an inner side of a corner portion K where the holder body part 21c and the second projecting part 21b are connected to each other. In the present embodiment, a tapered surface 21h connected to the corner portion K is provided on an inner peripheral surface of the holder body part 21c. The outer edge portion 25b of the electrode 25D is sandwiched between the tapered surface 21h of the holder body part 21c and the second projecting part 21b.

For example, the electrode 25D may be sandwiched between the second projecting part 21b and the holder body part 21c at the corner portion K by applying bending processing to the end portion 21d of the holder body part 21c as described with reference to FIG. 2(b). In this case, before the outer edge portion 25b is sandwiched, the electrode 25D may have a tubular portion along the inner peripheral surface of the end portion 21d of the holder body part 21c at the outer edge portion of the electrode 25D. The tubular portion of the electrode 25D may be folded together with the end portion 21d when bending processing is applied to the end portion 21d of the holder body part 21c to form the second projecting part 21b. In other words, the outer edge portion of the electrode 25D may be in a state where the members are doubly overlapped.

Thus, in the brush unit 20D, the electrode 25D can be more firmly fixed to the holder 21 by sandwiching the outer edge portion 25b of the electrode 25D between the second projecting part 21b and the holder body part 21c. Therefore, in the brush unit 20D, the electrode 25D and the holder 21 can be electrically connected to each other even more stably.

### (Fifth Modification)

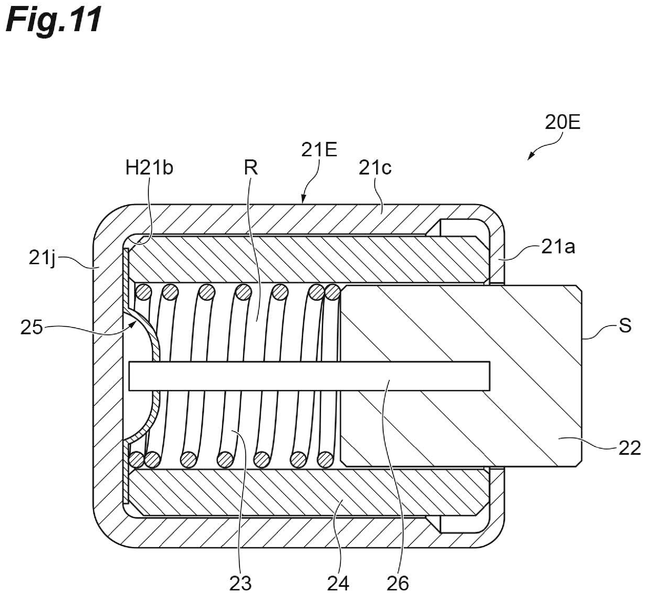

Next, a fifth modification of the brush unit will be described. As illustrated in FIG. 11, a brush unit 20E according to the fifth modification includes a holder 21E having a different configuration instead of the holder 21 according to the above-described embodiment. The holder 21E has a first projecting part 21a, a second projecting part 21j, and a holder body part 21c. The second projecting part 21j projects inward from the second opening part H21b of the holder body part 21c. The second projecting part 21j projects from the second opening part H21b and covers the entire second opening part H21b. The electrode 25 is sandwiched between the second projecting part 21j and the sleeve 24.

In this case, the first projecting part 21a may be formed by applying bending processing to an end portion of the holder body part 21c, similarly to the second projecting part 21b described with reference to FIG. 2(b). At that time, the first projecting part 21a is formed by bending processing so as to press the sleeve 24 toward the second projecting part 21j side. As a result, the sleeve 24 and the electrode 25 are sandwiched between the first projecting part 21a and the second projecting part 21j. Even in this case, the brush unit 20E is capable of securing a stable conductive path having higher conductivity.

Although the embodiments of the present disclosure have been described in the foregoing, the present disclosure is not limited to the above-described embodiments.

Although the coil-shaped spring 23 is used as the biasing part that biases the brush 22 and the like, a biasing part having another configuration may be used as long as the brush 22 and the like can be biased. The shaft conductive part 10 is not limited to including the steel ball 12. The shaft conductive part 10 may be configured to be able to abut on the end surface S of the brush 22 (e.g., configured to have a protrusion). In addition, the present disclosure is not limited to the configuration in which the steel ball 12 is provided in the shaft conductive part 10, and a steel ball may be attached to a distal end portion of the brush 22, and the steel ball may abut on a bottom surface of the recess of the shaft conductive part 10.

Although the connection device 1 electrically connects the rotary shaft 2 and the housing 4, a conductor other than the housing 4 may be electrically connected to the rotary shaft 2. A part of the configurations of the above-described embodiment and each modification may be appropriately rearranged.

### Reference Signs List

- 1: connection device
- 2: rotary shaft
- 4: housing (conductor)
- 10: shaft conductive part
- 20, 20A to 20E: brush unit
- 21, 21A to 21C, 21E: holder
- 21a: first projecting part
- 21b, 21j: second projecting part
- 21c: holder body part
- 21e: holder oil passage hole
- 21f: first oil passage hole
- 21g: second oil passage hole
- 22: brush
- 23: spring (biasing part)
- 24, 24A to 24C: sleeve
- 24a: inner oil passage groove
- 24b: introduction oil passage hole
- 24f: outer oil passage groove
- 24e: sleeve oil passage hole
- 25: electrode
- 26: wiring
- H21a: first opening part
- H21b: second opening part
- K: corner portion
- R: accommodation space

## Claims

1. A brush unit attached to a conductor and abutting on a shaft conductive part provided on a rotary shaft to electrically connect the conductor and the shaft conductive part,
the brush unit comprising:
a holder attached to the conductor, having conductivity, and having an accommodation space provided on an inner side thereof;
a brush accommodated in the accommodation space, abutting on the shaft conductive part via a first opening part provided in the holder, and having conductivity;
a biasing part that biases the brush toward a side of the first opening part;
a tubular sleeve accommodated in the accommodation space, having the brush arranged on an inner side thereof, and holding the brush so as to be slidable in a biasing direction of the brush by the biasing part;
an electrode having conductivity; and
a wiring connecting the brush and the electrode, wherein
the holder includes:
a holder body part provided so as to surround the sleeve, having a tubular shape extending in the biasing direction of the brush by the biasing part, and having one end opening part of the tubular shape as the first opening part; and
a second projecting part projecting inward from a second opening part on a side opposite to the first opening part in the holder body part,
the second projecting part being opposed to an end surface of the sleeve on a side of the second opening part in the biasing direction of the brush by the biasing part, and
the electrode being sandwiched between the second projecting part and the sleeve.

2. The brush unit according to claim 1, wherein
the holder further includes a first projecting part projecting inward from the first opening part in the holder body part,
the first projecting part being opposed to an end surface of the sleeve on a side of the first opening part in the biasing direction of the brush by the biasing part, and
the sleeve and the electrode being sandwiched between the first projecting part and the second projecting part.

3. The brush unit according to claim 2, wherein
the first projecting part is provided with a first oil passage hole,
the second projecting part is provided with a second oil passage hole, and
a portion between an inner peripheral surface and an outer peripheral surface of the sleeve is provided with a sleeve oil passage hole extending in the biasing direction of the brush by the biasing part.

4. The brush unit according to claim 1, wherein
the holder body part is provided with a holder oil passage hole connecting an outer peripheral surface and an inner peripheral surface of the holder body part, and
an outer peripheral surface of the sleeve is provided with an outer oil passage groove extending in the biasing direction of the brush by the biasing part.

5. The brush unit according to claim 1, wherein
the holder body part is provided with a holder oil passage hole connecting an outer peripheral surface and an inner peripheral surface of the holder body part,
an inner peripheral surface of the sleeve is provided with an inner oil passage groove extending in the biasing direction of the brush by the biasing part, and
the sleeve is further provided with an introduction oil passage hole connecting an outer peripheral surface of the sleeve and the inner oil passage groove.

6. The brush unit according to claim 1, wherein
the electrode is elastically deformable in a sandwiching direction of the second projecting part and the sleeve, and is sandwiched in a state of being compressed by the second projecting part and the sleeve.

7. The brush unit according to claim 1, wherein
an outer edge portion of the electrode is sandwiched between the holder body part and the second projecting part at a corner portion where the holder body part and the second projecting part are connected to each other.

8. A connection device electrically connecting a rotary shaft and a conductor, the connection device comprising:
a shaft conductive part attached to an end portion of the rotary shaft and having conductivity; and
the brush unit according to any one of claims 1 to 7, the brush unit having one end portion abutting on the shaft conductive part and the other end portion attached to the conductor to electrically connect the shaft conductive part and the conductor.
